# FASCICULE DE BREVET EUROPEEN

(11) **EP 1 008 467 B1**
(45) Date de publication et mention de la délivrance du brevet: **02.04.2003**
(21) Numéro de dépôt: 99123826.2
(22) Date de dépôt: 01.12.1999
(51) Int. Cl.: B60C 25/02

(54) **Procédé de montage d'un pneumatique sur une jante et dispositif pour la mise en oeuvre d'une étape de ce procédé**
Verfahren zur Montage eines Reifens auf einer Felge, sowie Anordnung zur Durchführung einer Stufe des Verfahrens
Method of mounting a tyre on a rim and device for carrying out a step of this method

(30) Priorité: 11.12.1998 FR 9815729
(43) Date de publication de la demande: 14.06.2000
(73) Titulaire: Sociéte de Technologie Michelin, 63000 Clermont-Ferrand Cedex 09 (FR); Michelin Recherche et Technique S.A., 1763 Granges-Paccot (CH)
(72) Inventeur: Schmitt, Ludovic, 63530 Sayat (FR)
(74) Mandataire: Dequire, Philippe Jean-Marie Denis

(56) Documents cités:
- FR-A- 587 978
- FR-A- 2 720 977
- US-A- 1 482 304
- US-A- 2 463 071

## Description

La présente invention concerne un procédé de montage d'un pneumatique sur une jante et un dispositif pour la mise en oeuvre d'une étape de ce procédé. Plus précisément, cette jante est telle qu'elle comporte en ses rebords périphériques des sièges respectivement destinés à recevoir les bourrelets du pneumatique.

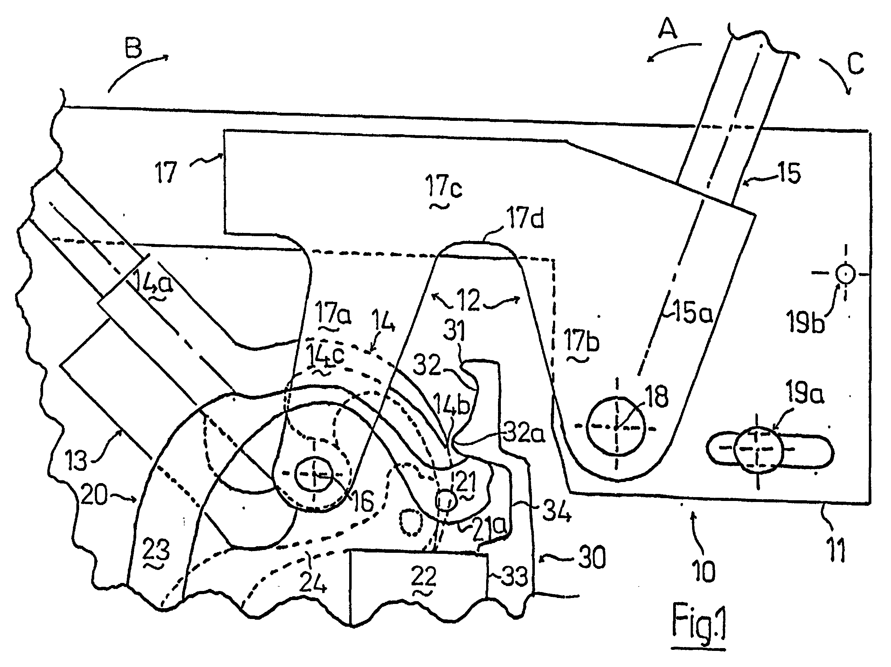

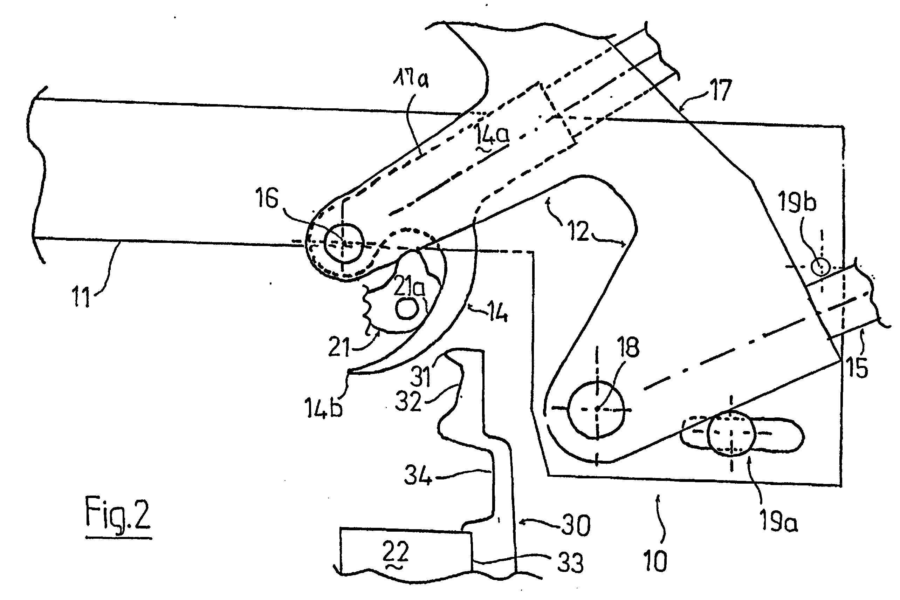

En relation avec les Figs. 1 et 2 ci-après présentées, une telle jante 30 présente les caractéristiques suivantes.

Elle comporte, à partir de ses deux saillies périphériques 31, un premier et un second sièges de jante 32 inclinés vers l'extérieur et respectivement destinés à recevoir un premier et un second bourrelets 21 du pneumatique 20 (seuls une première saillie 31, un premier siège 32 et le bourrelet 21 correspondants sont représentés). Entre les sièges 32 est prévue, d'une part, une portée 33 destinée à recevoir un appui 22 de soutien de bande de roulement 23 pour ledit pneumatique 20 et, d'autre part, une gorge de montage 34 reliant ladite portée 33 à un rebord axialement interne 32a dudit premier siège 32.

Dans la suite de la présente description, on appellera par convention premier siège 32 le siège qui est adjacent à la gorge 34, et second siège le siège qui est opposé à ladite gorge 34.

Quant au rebord axialement externe du siège 32, il est formé par la saillie périphérique correspondante 31.

De manière connue, le montage du pneumatique 20 sur cette jante 30 particulière s'effectue de la manière suivante.

Comme décrit dans le document de brevet français FR-A-2 720 977, on présente sur la jante 30 le premier bourrelet 21, du côté du second siège, puis on fait glisser ce premier bourrelet 21 axialement sur la portée 33 de manière à l'introduire dans la gorge 34. On monte ensuite ledit second bourrelet sur le second siège.

Puis, dans une étape d'extraction, on extrait le premier bourrelet 21 de la gorge 34 de manière à l'amener axialement à l'extérieur de la saillie 31 du premier siège 32.

Enfin, dans une étape de montage, on monte ce premier bourrelet 21 sur le premier siège 32.

Pour mettre en oeuvre ladite étape d'extraction, on procède usuellement d'une manière manuelle au moyen d'outils du type levier, de sorte à extraire progressivement le premier bourrelet 21 de la gorge 34.

Un inconvénient majeur de cette manière de procéder réside dans la durée relativement importante pour réaliser cette extraction sur toute la circonférence du pneumatique et, par conséquent, dans l'inadaptation de cette technique à la réalisation en série d'ensembles montés incorporant ce type de jantes.

Un but de la présente invention est de proposer un procédé de montage d'un pneumatique sur une jante, ladite jante comportant en chacun de ses deux bords périphériques un siège de jante destiné à recevoir un bourrelet dudit pneumatique, ladite jante comportant entre ses deux sièges, d'une part, une portée et, d'autre part, une gorge de montage reliant ladite portée à un rebord axialement interne de l'un desdits sièges, ou premier siège,
ledit procédé consistant essentiellement à présenter l'un des bourrelets dudit pneumatique sur ladite jante et du côté de l'autre siège, ou second siège, puis à déplacer ce premier bourrelet axialement le long de ladite portée de manière à l'introduire dans ladite gorge, à monter l'autre bourrelet, ou second bourrelet, sur ledit second siège puis, dans une étape d'extraction, à extraire ledit premier bourrelet de ladite gorge de manière à l'amener axialement à l'extérieur dudit premier siège et, dans une étape de montage, à monter ledit premier bourrelet sur ledit premier siège,
qui permette de réaliser des séries d'ensembles montés à une cadence relativement élevée, sans risque d'altérer les pneumatiques correspondants.

A cet effet, ladite étape d'extraction consiste, dans un premier temps, à créer au moins un espace local entre ledit premier bourrelet et ledit rebord axialement interne, dans un second temps, à insérer dans ledit espace local un moyen de préhension de manière qu'il occupe une position d'appui sur la face interne dudit premier bourrelet, dans un troisième temps, à faire pivoter ledit moyen de préhension dans ladite position d'appui de sorte à amener ledit premier bourrelet dans une position d'extraction locale, radialement et axialement à l'extérieur dudit premier siège et, dans un quatrième temps, à extraire ledit premier bourrelet sur toute la circonférence dudit pneumatique,
ledit second temps consistant à faire pivoter ledit moyen de préhension sur un premier axe de pivotement situé radialement à l'extérieur de ladite gorge, de sorte que ledit moyen de préhension occupe ladite position d'appui, et ledit troisième temps consistant à commander le pivotement dudit moyen de préhension dans ladite position d'appui sous la commande d'un moyen de commande auquel est couplé ledit moyen de préhension, de telle manière que ledit moyen de préhension pivote autour d'un second axe de pivotement situé radialement à l'intérieur de ladite gorge.

Selon une autre caractéristique du procédé selon l'invention, pour la mise en oeuvre dudit premier temps, on appuie en un emplacement ponctuel du flanc dudit pneumatique se terminant par ledit premier bourrelet, de sorte à créer ledit espace local.

Selon une autre caractéristique du procédé selon l'invention, pour la mise en oeuvre dudit quatrième temps, on met en rotation ledit pneumatique autour de son axe de révolution, ledit moyen de préhension occupant ladite position d'extraction locale.

Selon un premier mode de mise en oeuvre dudit quatrième temps, seuls ledit pneumatique et ladite jante sont solidairement entraînés en rotation.

Selon un second mode de mise en oeuvre dudit quatrième temps, est insérée sous ladite face interne dudit premier bourrelet, en un autre point de la circonférence dudit pneumatique, la base sensiblement plane d'une patte courbée en forme de « L », ledit pneumatique, ladite jante et ledit moyen de préhension étant solidairement entraînés en rotation par rapport à ladite patte.

Un autre but de la présente invention est de proposer un dispositif pour l'extraction dudit premier bourrelet comportant un bâti et une plate-forme destinée à recevoir ladite jante pourvue dudit pneumatique perpendiculairement à l'axe de révolution de ce dernier, un moyen de préhension destiné à appuyer sur la face interne dudit premier bourrelet étant monté pivotant sur un premier axe de pivotement, mobile par rapport audit bâti et parallèle au plan de ladite plate-forme, ce dispositif procurant, en fonctionnement en série, le résultat précité de cadence de montage relativement élevée.

A cet effet, ledit dispositif est tel que que ledit moyen de préhension est couplé, par l'intermédiaire d'une biellette, à un moyen de commande prévu pour commander le pivotement dudit moyen de préhension autour d'un second axe de pivotement, monté fixe sur ledit bâti et également parallèle au plan de ladite plate-forme.

Selon une autre caractéristique d'un dispositif selon l'invention, ladite biellette est articulée sur lesdits axes de pivotement.

Ledit moyen de préhension est par exemple pourvu d'un bras prévu pour l'actionner en pivotement, de telle manière que ledit moyen de préhension forme sensiblement l'embranchement oblique d'un « y » dont la jambe est formée par ledit bras, ledit premier axe de pivotement étant monté à une extrémité dudit bras qui est en regard de l'extrémité libre dudit moyen de préhension.

De préférence, ledit moyen de préhension présente une courbure qui admet sensiblement pour centre ledit premier axe de pivotement.

Avantageusement, ledit moyen de préhension présente une extrémité libre effilée et des bords latéraux chanfreinés dans une partie médiane dudit moyen de préhension, où son rayon de courbure est sensiblement maximal.

Selon un exemple de réalisation de l'invention, ledit dispositif comporte un doigt destiné à appuyer sur ledit pneumatique, ledit doigt étant monté le long du côté dudit bras qui est opposé à celui dudit moyen de préhension et étant également commandé par ledit moyen de commande.

Selon une autre caractéristique d'un dispositif selon l'invention, ledit bâti est pourvu de moyens de blocage pour bloquer ledit moyen de commande dans ladite position d'extraction.

Avantageusement, ledit moyen de commande et/ou ledit bras et/ou ledit doigt sont pourvus de vérins respectivement prévus pour les actionner.

Les caractéristiques précitées de la présente invention, ainsi que d'autres, seront mieux comprises à la lecture de la description suivante d'un exemple de réalisation de l'invention, donné à titre illustratif et non limitatif, ladite description étant réalisée en relation avec les dessins joints, parmi lesquels:
la Fig. 1 est une vue schématique d'une partie d'un dispositif selon l'invention pour la mise en oeuvre de ladite étape d'extraction lors du montage dudit pneumatique sur ladite jante, ledit dispositif et ledit pneumatique étant partiellement représentés dans une position de logement dans ladite gorge et dans une position intermédiaire d'extraction, et
la Fig. 2 est une vue schématique et également partielle du dispositif de la Fig. 1 dans une position définitive d'extraction.

Un dispositif 10 selon l'invention pour l'extraction d'un pneumatique 20 de ladite gorge 34 de jante 30 comporte essentiellement un bâti 11, une plate-forme (non représentée aux Figs. 1 et 2) qui est destinée à recevoir la jante 30 pourvue du pneumatique 20 perpendiculairement à l'axe de révolution de ce dernier et qui est prévue en contrebas dudit bâti 11, et des moyens 12 montés sur le bâti 11 et prévus pour coopérer avec ledit premier bourrelet 21 du pneumatique 20 pour ladite extraction.

Ces moyens 12 comportent essentiellement au moins un doigt 13 qui est destiné à appuyer sur le flanc 24 du pneumatique 20 se terminant par le premier bourrelet 21, un moyen de préhension pivotant 14 destiné à appuyer sur la face interne 21a dudit premier bourrelet 21, et un moyen de commande 15 prévu pour commander le pivotement dudit moyen de préhension 14.

Le moyen de préhension 14 est monté pivotant sur un premier axe de pivotement 16 parallèle au plan de ladite plate-forme.

Dans cet exemple de réalisation, le moyen de préhension 14 est pourvu d'un bras 14a prévu pour l'actionner en pivotement, de telle manière que ledit moyen de préhension 14 forme sensiblement l'embranchement oblique d'un « y » dont la jambe serait formée par ledit bras 14a. Comme cela est visible à la Fig. 1, le premier axe de pivotement 16 est monté à une extrémité du bras 14a qui est en regard de l'extrémité libre 14b dudit moyen de préhension 14.

Dans ce même exemple, on voit que ledit doigt 13 est monté sur le côté du bras 14a qui est opposé à celui du moyen de préhension 14.

De préférence, le moyen de préhension 14 présente une courbure lui conférant une forme de crochet. Cette courbure admet sensiblement pour centre le premier axe de pivotement 16, et l'extrémité libre 14b précitée est effilée.

De plus, les bords latéraux 14c du moyen de préhension 14 sont préférentiellement chanfreinés, ceci dans une partie médiane dudit moyen de préhension 14. Comme on peut le voir à la Fig. 1, cette partie médiane présente un rayon de courbure sensiblement maximal.

Le moyen de préhension 14 est couplé audit moyen de commande 15 par l'intermédiaire d'une biellette 17, de telle manière qu'il puisse pivoter autour d'un second axe de pivotement 18 sous la commande dudit moyen 15, qui est solidaire de la biellette 17. Ce second axe 18 est monté fixe sur le bâti 11 parallèlement au plan de ladite plate-forme.

Quant à la biellette 17, elle est montée, d'une part, sur ledit premier axe 16 et, d'autre part, sur ledit second axe 18. Dans l'exemple de la Fig. 1, cette biellette 17 est constituée de deux pattes 17a et 17b qui sont respectivement montées sur lesdits axes 16 et 18, et qui sont reliées entre elles par un tronçon 17c, de telle manière que ladite biellette 17 présente entre lesdites pattes 17a et 17b un évidement 17d lui conférant sensiblement une forme de π.

Dans l'exemple de la Fig. 1, le moyen de commande 15 est constitué d'un bras dont l'axe de symétrie 15a passe par ledit second axe 18.

Un dispositif 10 selon l'invention comporte également des moyens 19a, 19b pour bloquer le moyen de commande 15 dans une position déterminée. Dans cet exemple de réalisation, ceux-ci sont constitués de deux butées 19a et 19b amovibles.

Ce dispositif 10 fonctionne de la manière suivante, une fois que le premier bourrelet 21 a été positionné dans la gorge 34, comme représenté en trait plein à la Fig. 1(l'autre bourrelet étant chaussé dans ledit second siège).

On commence par actionner le doigt 13 de manière à exercer, sur le flanc 24 du pneumatique 20, une force tendant à créer un espace local entre ce bourrelet 21 et ledit rebord axialement interne 32a du premier siège 32. Cette position localement espacée du bourrelet 21 visible en traits pointillés à la Fig. 1.

Dans l'exemple de la Fig. 1, on effectue cet actionnement en faisant pivoter le moyen de commande 15 dans le sens de la flèche A. Cependant on comprendra que d'autres modes d'actionnement de ce doigt 13 pourraient être utilisés.

On comprendra également que ce doigt 13 pourrait être monté autrement, pourvu qu'il puisse appuyer sur ledit flanc 24 de sorte à créer ledit espace local.

Tout en continuant d'appliquer la force précitée, on fait ensuite pivoter le bras 14a sur le premier axe de pivotement 16 dans le sens de la flèche B, de sorte à insérer le moyen de préhension 14 dans ledit espace local. Dans cette position d'insertion, on peut voir que l'extrémité 14b du moyen de préhension 14 se trouve radialement à l'intérieur du bourrelet 21.

On notera que la forme effilée de ladite extrémité 14b facilite cette insertion.

On cesse ensuite d'exercer ladite force sur le flanc 24, de sorte que le moyen de préhension 14 appuie, par l'intermédiaire de sa partie médiane, sur la face interne 21a du bourrelet 21, comme représenté en traits pointillés à la Fig. 1 dans une position d'appui, ou position intermédiaire d'extraction.

On notera que la structure épaisse et chanfreinée de la partie médiane du moyen de préhension 14 est bien adaptée pour appuyer sur le bourrelet 21 sans le déformer.

Toujours dans l'exemple de la Fig. 1, on notera que l'on cesse d'exercer la force précitée via ce pivotement du bras 14a dans le sens de la flèche B.

Puis on fait pivoter le moyen de commande 15 autour du second axe de pivotement 18 et dans le sens de la flèche C, le moyen de préhension 14 occupant toujours ladite position d'appui, ce qui a également pour effet de faire pivoter ledit moyen de préhension 14 autour dudit axe 18 via la biellette 17. On interrompt ce pivotement lorsque le moyen de préhension 14 a atteint la position définitive d'extraction locale de la Fig. 2.

Comme on peut le voir à la Fig. 2, cette position définitive est telle que le bourrelet 21 occupe alors une position radialement et axialement à l'extérieur du siège 32 correspondant.

On procède ensuite au blocage, dans cette position définitive d'extraction, du moyen de commande 15 et, par conséquent, du moyen de préhension 14, via les butées 19a et 19b.

Puis, selon un premier mode de réalisation, on actionne la plate-forme de manière à la faire tourner sur elle-même, de telle sorte que le pneumatique 20 et la jante 30 tournent solidairement autour de leur axe de révolution, les moyens d'extraction 12 restant immobiles.

Cette mise en rotation du pneumatique 20 et de la jante 30 a pour effet, en une seule révolution, d'extraire le bourrelet 21 sur toute la circonférence du pneumatique 20.

On notera que, lors de la rotation du pneumatique 20 au contact du moyen de préhension 14, la forme précitée de ce dernier permet de minimiser d'une manière satisfaisante les risques de déformation du bourrelet 21 qui sont inhérents à ce contact.

On notera également que ladite patte 17a de la biellette 17 présente, à proximité de l'extrémité libre de son bord intérieur qui est destinée à faire face au bourrelet 21 extrait (position de la Fig. 2), une forme adaptée pour ne pas entrer en contact avec ce bourrelet 21 lors de la rotation précitée du pneumatique 20, ceci afin de ne pas entraver celle-ci. A cet effet, cette forme peut être de type localement rentrante, par exemple en arrondi, à l'instar de la partie arrière (en pointillés) du moyen de préhension 14 qui est notamment visible à la Fig. 2.

Selon un second mode de réalisation, on insère sous la face interne 21a du bourrelet 21, en un point de la circonférence du pneumatique 20 autre que celui où se trouve le moyen de préhension 14 dans la position d'extraction de la Fig. 2, la base sensiblement plane d'une patte courbée en forme de « L » (non représentée). Puis on actionne ladite plate-forme en rotation sur son axe, de sorte à entraîner solidairement en rotation le pneumatique 20, la jante 30, et le moyen de préhension 14, seule ladite patte en « L » restant immobile.

Cette mise en rotation du pneumatique 20 a également pour effet, en une seule révolution, d'extraire le bourrelet 21 sur toute la circonférence du pneumatique 20.

On notera que, dans ce second mode, le pneumatique 20 tourne seulement au contact de la base plane de la patte en « L », et qu'il demeure immobile par rapport au moyen de préhension 14. Il résulte de ce contact sensiblement « à plat » une minimisation supplémentaire des risques de déformation précités.

L'extraction du bourrelet 21 étant réalisée, on termine l'opération de montage du pneumatique 20 sur la jante 30 en procédant au montage de ce bourrelet 21.

On notera également qu'un dispositif 10 selon l'invention pour la mise en oeuvre de l'ensemble de l'étape d'extraction du bourrelet 21 pourrait avantageusement comporter des vérins respectivement prévus pour actionner de la mnaière précitée ledit moyen de commande 15 et/ou ledit bras 14a et/ou ledit doigt 13.

## Revendications

1. Procédé de montage d'un pneumatique (20) sur une jante (30), ladite jante (30) comportant en chacun de ses deux bords périphériques un siège de jante (32) destiné à recevoir un bourrelet (21) dudit pneumatique (20), ladite jante (30) comportant entre ses deux sièges (32), d'une part, une portée (33) et, d'autre part, une gorge de montage (34) reliant ladite portée (33) à un rebord axialement interne (32a) de l'un desdits sièges (32), ou premier siège, ledit procédé consistant essentiellement à présenter l'un des bourrelets (21) dudit pneumatique (20) sur ladite jante (30) et du côté de l'autre siège, ou second siège, puis à déplacer ce premier bourrelet (21) axialement le long de ladite portée (33) de manière à l'introduire dans ladite gorge (34), à monter l'autre bourrelet, ou second bourrelet, sur ledit second siège puis, dans une étape d'extraction, à extraire ledit premier bourrelet (21) de ladite gorge (34) de manière à l'amener axialement à l'extérieur dudit premier siège (32) et, dans une étape de montage, à monter ledit premier bourrelet (21) sur ledit premier siège (32),
**caractérisé en ce que** ladite étape d'extraction consiste, dans un premier temps, à créer au moins un espace local entre ledit premier bourrelet (21) et ledit rebord axialement interne (32a), dans un second temps, à insérer dans ledit espace local un moyen de préhension (14) de manière qu'il occupe une position d'appui sur la face interne (21a) dudit premier bourrelet (21), dans un troisième temps, à faire pivoter ledit moyen de préhension (14) dans ladite position d'appui de sorte à amener ledit premier bourrelet (21) dans une position d'extraction locale, radialement et axialement à l'extérieur dudit premier siège (32) et, dans un quatrième temps, à extraire ledit premier bourrelet (21) sur toute la circonférence dudit pneumatique (20),
ledit second temps consistant à faire pivoter ledit moyen de préhension (14) sur un premier axe de pivotement (16) situé radialement à l'extérieur de ladite gorge (34), de sorte que ledit moyen de préhension (14) occupe ladite position d'appui, et ledit troisième temps consistant à commander le pivotement dudit moyen de préhension (14) dans ladite position d'appui sous la commande d'un moyen de commande (15) auquel est couplé ledit moyen de préhension (14), de telle manière que ledit moyen de préhension (14) pivote autour d'un second axe de pivotement (18) situé radialement à l'intérieur de ladite gorge (34).

2. Procédé de montage selon la revendication 1, **caractérisé en ce qu'**il consiste, pour la mise en oeuvre dudit premier temps, à appuyer en un emplacement ponctuel du flanc (24) dudit pneumatique (20) se terminant par ledit premier bourrelet (21), de sorte à créer ledit espace local.

3. Procédé de montage selon la revendication 1 ou 2, **caractérisé en ce qu'**il consiste, pour la mise en oeuvre dudit quatrième temps, à mettre en rotation ledit pneumatique (20) autour de son axe de révolution, ledit moyen de préhension (14) occupant ladite position d'extraction locale.

4. Procédé de montage selon la revendications 3, **caractérisé en ce que**, pour la mise en oeuvre dudit quatrième temps, seuls ledit pneumatique (20) et ladite jante (30) sont solidairement entraînés en rotation.

5. Procédé de montage selon la revendication 3, **caractérisé en ce que**, pour la mise en oeuvre dudit quatrième temps, est insérée sous ladite face interne (21a) dudit premier bourrelet (21), en un autre point de la circonférence dudit pneumatique (20), la base sensiblement plane d'une patte courbée en forme de « L », et **en ce que** ledit pneumatique (20), ladite jante (30) et ledit moyen de préhension (14) sont solidairement entraînés en rotation par rapport à ladite patte.

6. Dispositif (10) pour la mise en oeuvre de ladite étape d'extraction du procédé selon une des revendications précédentes, ledit dispositif (10) comportant un bâti (11) et une plate-forme destinée à recevoir ladite jante (30) pourvue dudit pneumatique (20) perpendiculairement à l'axe de révolution de ce dernier, un moyen de préhension (14) destiné à appuyer sur la face interne (21a) dudit premier bourrelet (21) étant monté pivotant sur un premier axe de pivotement (16), mobile par rapport audit bâti (11) et parallèle au plan de ladite plate-forme, **caractérisé en ce que** ledit moyen de préhension (14) est couplé, par l'intermédiaire d'une biellette (17), à un moyen de commande (15) prévu pour commander le pivotement dudit moyen de préhension (14) autour d'un second axe de pivotement (18), monté fixe sur ledit bâti (11) et également parallèle au plan de ladite plate-forme.

7. Dispositif (10) selon la revendication 6, **caractérisé en ce que** ladite biellette (17) est articulée sur lesdits axes de pivotement (16 et 18).

8. Dispositif (10) selon la revendication 6 ou 7, **caractérisé en ce que** ledit moyen de préhension (14) est pourvu d'un bras (14a) prévu pour l'actionner en pivotement sur ledit premier axe (16), de telle manière que ledit moyen de préhension (14) forme sensiblement l'embranchement oblique d'un « y » dont la jambe est formée par ledit bras (14a), ledit premier axe de pivotement (16) étant monté à une extrémité dudit bras (14a) qui est en regard de l'extrémité libre (14b) dudit moyen de préhension (14a).

9. Dispositif (10) selon une des revendications 6 à 8, **caractérisé en ce que** ledit moyen de préhension (14) présente une courbure qui admet sensiblement pour centre ledit premier axe de pivotement (16).

10. Dispositif (10) selon la revendication 9, **caractérisé en ce que** ledit moyen de préhension (14) présente une extrémité libre (14b) effilée et des bords latéraux (14c) chanfreinés dans une partie médiane dudit moyen de préhension (14), où son rayon de courbure est sensiblement maximal.

11. Dispositif(10) selon une des revendications 8 à 10, **caractérisé en ce qu'**il comporte un doigt (13) destiné à appuyer sur ledit pneumatique (20), ledit doigt (13) étant monté le long du côté dudit bras (14a) qui est opposé à celui dudit moyen de préhension (14) et étant également commandé par ledit moyen de commande (15).

12. Dispositif (10) selon une des revendications 6 à 11, **caractérisé en ce que** ledit bâti (11) est pourvu de moyens de blocage (19a, 19b) pour bloquer ledit moyen de commande (15) dans ladite position d'extraction.

13. Dispositif (10) selon la revendication 11 ou 12, **caractérisé en ce que** ledit moyen de commande (15) et/ou ledit bras (14a) et/ou ledit doigt (13) sont pourvus de vérins respectivement prévus pour les actionner.

## Claims

1. A method of mounting a tyre (20) on a rim (30), said rim (30) comprising on each of its two peripheral edges a rim seat (32) for receiving a bead (21) of said tyre (20), said rim (30) comprising between its two seats (32), on one hand, a bearing surface (33), and, on the other hand, a mounting groove (34) connecting said bearing surface (33) to an axially inner flange (32a) of one of said seats (32), or first seat, said method essentially consisting of presenting one of the beads (21) of said tyre (20) on said rim (30) and on the side of the other seat, or second seat, then moving that first bead (21) axially along said bearing surface (33), so as to insert it in said groove (34), mounting the other bead, or second bead, on said second seat, and then, in an extraction stage, extracting said first bead (21) from said groove (34), so as to bring it axially to the outside of said first seat (32) and, in a mounting stage, in mounting said first bead (21) on said first seat (32),
**characterised in that** said extraction stage consists, in a first step, of creating at least one local space between said first bead (21) and said axially inner flange (32a), in a second step, inserting a gripping means (14) in said local space so that it occupies a bearing position on the inner face (21 a) of said first bead (21), in a third step, pivoting said gripping means (14) in said bearing position, so as to bring said first bead (21) into a local extraction position, radially and axially to the outside of said first seat (32), and, in a fourth step, extracting said first bead (21) over the whole circumference of said tyre (20),
said second step consisting of pivoting said gripping means (14) on a first pivot pin (16) situated radially to the outside of said groove (34), so that said gripping means (14) occupies said bearing position, and said third step consisting of controlling the pivoting of said gripping means (14) in said bearing position under the control of a control means (15) to which said gripping means (14) is coupled, so that said gripping means (14) pivots about a second pivot pin (18) situated radially to the inside of said groove (34).

2. A mounting method according to Claim 1, **characterised in that** it consists, for the application of said first step, of bearing on a localised site on the sidewall (24) of said tyre (20) ending in said first bead (21), so as to create said local space.

3. A mounting method according to Claims 1 or 2, **characterised in that** it consists, for the application of said fourth step, of rotating said tyre (20) about its axis of rotation, said gripping means (14) occupying said local extraction position.

4. A mounting method according to Claim 3, **characterised in that**, for the application of said fourth step, only said tyre (20) and said rim (30) are integrally driven in rotation.

5. A mounting method according to Claim 3, **characterised in that**, for the application of said fourth step, beneath said inner face (21a) of said first bead (21) there is inserted at another point on the circumference of said tyre (20), the substantially flat base of an L-shaped curved lug, and **in that** said tyre (20), said rim (30) and said gripping means (14) are integrally driven in rotation relative to said lug.

6. A device (10) for implementing in said extraction stage of the method according to any one of the preceding claims, said device (10) comprising a frame (11) and a platform for receiving said rim (30) equipped with said tyre (20) perpendicular to the axis of rotation of the latter, and a gripping means (14) for bearing on the inner face (21 a) of said first bead (21), being pivotably mounted on a first pivot pin (16) in relation to said frame (11) and parallel to the plane of said platform, **characterised in that** said gripping means (14) is coupled, by means of a rod (17), to a control means (15) provided to control the pivoting of said gripping means (14) about a second pivot pin (18), mounted fixed on said frame (11) and also parallel to the plane of said platform.

7. A device (10) according to Claim 6, **characterised in that** said rod (17) is hinged on said pivot pins (16 and 18).

8. A device (10) according to Claim 6 or 7, in which said gripping means (14) is provided with an arm (14a) to pivotably activate it on said first pin (16a), so that said gripping means (14) substantially forms the oblique branch of a "y" whose leg is formed by said arm (14a), said first pivot pin (16) being mounted at one end of said arm (14a) which is opposite the free end (14b) of said gripping means (14a).

9. A device (10) according to one of Claims 6 to 8, **characterised in that** said gripping means (14) has a curvature which substantially allows centring of said first pivot pin (16).

10. A device (10) according to Claim 9, in which said gripping means (14) has a tapered free end (14b) and beveled side edges (14c) in a mid-portion of said gripping means (14), where its radius of curvature is substantially maximal.

11. A device (10) according to one of Claims 8 to 10, **characterised in that** it comprises a finger (13) for bearing on said tyre (20), said finger (13) being mounted along the side of said arm (14a) opposite that of said gripping means (14) and also being controlled by said control means (15).

12. A device (10) according to one of Claims 6 to 11, **characterised in that** said frame (11) is provided with locking means (19a, 19b) for locking said control means (15) in said extraction position.

13. A device (10) according to Claim 11 or 12, **characterised in that** said control means (15) and/or said arm (14a) and/or said finger (13) are equipped, respectively, with jacks to activate them.

## Patentansprüche

1. Verfahren zur Montage eines Reifens (20) auf einer Felge (30), wobei die genannte Felge (30) in jedem ihrer beiden Umfangsränder einen Felgensitz (32) aufweist, der dazu bestimmt ist, einen Wulst (21) des genannten Reifens (20) aufzunehmen, und wobei die genannte Felge (30) zwischen ihren beiden Sitzen (32) einerseits einen Bereich (33) und andererseits eine Montagenut (34) aufweist, die den genannten Bereich (33) mit einer axial inneren Umrandung (32a) des einen der genannten Sitze (32) oder einem ersten Sitz verbindet, wobei das genannte Verfahren im wesentlichen darin besteht, den einen der Wülste (21) des genannten Reifens (20) auf der genannten Felge (30) und auf der Seite des anderen Sitzes oder zweiten Sitzes aufzubringen, dann diesen ersten Wulst (21) axial längs des genannten Bereiches (33) derart zu versetzen, daß er in die genannte Nut (34) eingeführt wird, den anderen Wulst oder zweiten Wulst auf dem genannten zweiten Sitz zu montieren, dann in einem Ausziehschritt den genannten ersten Wulst (21) aus der genannten Nut (34) derart herauszuziehen, daß er axial auf die Außenseite des genannten ersten Sitzes (32) mitgenommen wird, und in einem Montageschritt den genannten ersten Wulst (21) auf dem genannten ersten Sitz (32) zu montieren,
**dadurch gekennzeichnet, daß** der genannte Ausziehschritt darin besteht, in einem ersten Takt mindestens einen örtlichen Zwischenraum zwischen dem genannten ersten Wulst (21) und der genannten, axial inneren Umrandung (32a) zu schaffen, in einem zweiten Takt in den genannten, örtlichen Zwischenraum ein Greifmittel (14) derart einzuführen, daß es eine Position der Auflage auf der Innenfläche (21a) des genannten ersten Wulstes (21) einnimmt, in einem dritten Takt das genannte Greifmittel (14) in der genannten Position der Auflage derart schwenken zu lassen, daß der genannte erste Wulst (21) in eine örtliche Auszugslage verbracht wird, die radial und axial auf der Außenseite des genannten ersten Sitzes (32) liegt, und in einem vierten Takt den genannten ersten Wulst (21) über den gesamten Umfang des genannten Reifens (20) herauszuziehen,
wobei der genannte zweite Takt darin besteht, das genannte Greifmittel (14) derart auf einer ersten Schwenkachse (16) schwenken zu lassen, die radial auf der Außenseite der genannten Nut (34) gelegen ist, daß das genannte Greifmittel (14) die genannte Position der Auflage einnimmt, und wobei der genannte dritte Takt darin besteht, die Schwenkbewegung des genannten Greifmittels (14) in der genannten Position der Auflage unter Steuerung eines Steuermittels (15), mit dem das genannte Greifmittel (14) gekoppelt ist, derart anzusteuern, daß das genannte Greifmittel (14) um eine zweite Schwenkachse (18) schwenkt, die radial im Inneren der genannten Nut (34) gelegen ist.

2. Montageverfahren nach Anspruch 1, **dadurch gekennzeichnet, daß** es zur Durchführung des ersten Taktes darin besteht, daß man an einer punktartigen Stelle der Flanke (24) des genannten Reifens (20), die durch den genannten ersten Wulst (21) endet, angreift, um auf diese Weise den genannten örtlichen Zwischenraum zu schaffen.

3. Montageverfahren nach Anspruch 1 oder 2, **dadurch gekennzeichnet, daß** es zur Durchführung des genannten vierten Taktes darin besteht, den genannten Reifen (20) um seine Drehachse in Drehung zu versetzen, wobei das genannte Greifmittel (14) die genannte örtliche Ausziehposition einnimmt.

4. Montageverfahren nach Anspruch 3, **dadurch gekennzeichnet, daß** zur Durchführung des genannten vierten Taktes allein der genannte Reifen (20) und die genannte Felge (30) gemeinsam zur Drehung angetrieben sind.

5. Montageverfahren nach Anspruch 3, **dadurch gekennzeichnet, daß** zur Durchführung des genannten vierten Taktes unter der genannten Innenfläche (21a) des genannten ersten Wulstes (21) an einem anderen Punkt des Umfangs des genannten Reifens (20) die im wesentlichen ebene Unterseite einer gekrümmten, L-förmigen Klaue eingeführt wird, wobei der genannte Reifen (20), die genannte Felge (30) und das genannte Greifmittel (14) gemeinsam zur Drehung bezüglich der genannten Klaue angetrieben werden.

6. Vorrichtung (10) zur Durchführung des Ausziehschrittes des Verfahrens nach einem der vorangehenden Ansprüche, wobei die genannte Vorrichtung (10) ein Gestell (11) und eine Plattform aufweist, die zur Aufnahme der genannten Felge (30), die mit dem genannten Reifen (20) lotrecht in der Drehachse dieses letztgenannten versehen ist, bestimmt ist, wobei ein Greifmittel (14), das zum Andrücken auf der Innenoberfläche (21a) des genannten, ersten Wulstes (21) bestimmt ist, schwenkbar auf einer ersten Schwenkachse (16) angebracht ist, die bezüglich des genannten Gestells (11) beweglich ist und parallel zur Ebene der genannten Plattform vorliegt, **dadurch gekennzeichnet, daß** das genannte Greifmittel (14) mittels eines Schwingarms (17) mit einem Steuermittel (15) gekoppelt ist, das zur Steuerung der Schwenkbewegung des genannten Greifmittels (14) um eine zweite Schwenkachse (18) vorgesehen ist, die fest auf dem genannten Gestell (11) angebracht ist, und ebenfalls parallel zur Ebene der genannten Plattform verläuft.

7. Vorrichtung (10) nach Anspruch 6, **dadurch gekennzeichnet, daß** der genannte Schwingarm (17) gelenkig auf den genannten Schwenkachsen (16 und 18) gelagert ist.

8. Vorrichtung (10) nach Anspruch 6 oder 7, **dadurch gekennzeichnet, daß** das genannte Greifmittel (14) mit einem Arm (14a) versehen ist, der vorgesehen ist, um es bei der Schwenkbewegung auf der genannten, ersten Achse (16) zu betätigen, so daß auf diese Weise das genannte Greifmittel (14) im wesentlichen die schräge Abzweigung eines "y" bildet, deren Schenkel vom genannten Arm (14a) gebildet ist, wobei die genannte erste Schwenkachse (16) an einem Ende des genannten Armes (14a) angebracht ist, das dem freien Ende (14b) des genannten Greifmittels (14a) gegenüberliegt.

9. Vorrichtung (10) nach einem der Ansprüche 6 bis 8, **dadurch gekennzeichnet, daß** das genannte Greifmittel (14) eine Krümmung aufweist, die die genannte erste Schwenkachse (16) im wesentlichen in die Mitte versetzt.

10. Vorrichtung (10) nach Anspruch 9, **dadurch gekennzeichnet, daß** das genannte Greifmittel (14) ein angespitztes, freies Ende (14b) und abgeschrägte Seitenkanten (14c) in einem mittleren Teil des genannten Greifmittels (14) aufweist, wo sein Krümmungsradius maximal ist.

11. Vorrichtung (10) nach einem der Ansprüche 8 bis 10, **dadurch gekennzeichnet, daß** sie einen Finger (13) aufweist, der dazu bestimmt ist, gegen den genannten Reifen (20) anzudrücken, wobei der genannte Finger (13) längs der Seite des genannten Armes (14a) angebracht ist, die der des genannten Greifmittels (14) gegenüberliegt und ebenfalls von dem genannten Steuermittel (15) angesteuert wird.

12. Vorrichtung (10) nach einem der Ansprüche 6 bis 11, **dadurch gekennzeichnet, daß** das genannte Gestell (11) mit Sperrmitteln (19a, 19b) versehen ist, um das genannte Steuermittel (15) in der Ausziehstellung zu blockieren.

13. Vorrichtung (10) nach Anspruch 11 oder 12, **dadurch gekennzeichnet, daß** das genannte Steuermittel (15) und/oder der genannte Arm (14a) und/oder der genannte Finger (13) mit Zylindern bzw. Hubeinrichtungen versehen sind, die jeweils vorgesehen sind, um sie zu betätigen.
